# EUROPÄISCHE PATENTSCHRIFT

(11) **EP 4 179 123 B1**
(45) Veröffentlichungstag und Bekanntmachung des Hinweises auf die Patenterteilung: **03.04.2024**
(21) Anmeldenummer: 21742329.2
(22) Anmeldetag: 02.07.2021
(51) Int. Cl.: C22B 1/00, C22B 7/00, C22B 7/04, C22B 15/00

(54) **VERFAHREN ZUR WIEDERGEWINNUNG VON METALLEN AUS ELEKTROSCHROTT**
METHOD FOR RECOVERING METALS FROM ELECTRONIC WASTE
PROCÉDÉ DE RÉCUPÉRATION DE MÉTAUX À PARTIR DE DÉCHETS ÉLECTRONIQUES

(30) Priorität: 13.07.2020 DE 102020208739
(43) Veröffentlichungstag der Anmeldung: 17.05.2023
(73) Patentinhaber: SMS Group GmbH, 40237 Düsseldorf (DE)
(72) Erfinder: KAUSSEN, Frank Marlin, 52066 Aachen (DE); DEGEL, Rolf, 40880 Ratingen (DE); LUX, Timm, 40668 Meerbusch (DE)
(74) Vertreter: Kross, Ulrich
(86) Internationale Anmeldenummer: PCT/EP2021/068313
(87) Internationale Veröffentlichungsnummer: WO 2022/012968

(56) Entgegenhaltungen:
- WO-A1-86/05211
- CA-A1- 3 085 071
- US-A- 3 664 828
- ALVEAR FLORES GERARDO R ET AL: "ISASMELT(TM) for the Recycling of E-Scrap and Copper in the U.S. Case Study Example of a New Compact Recycling P", JOM: JOURNAL OF METALS, SPRINGER NEW YORK LLC, UNITED STATES, Bd. 66, Nr. 5, 18. März 2014 (2014-03-18), Seiten 823-832, XP035315217, ISSN: 1047-4838, DOI: 10.1007/S11837-014-0905-3 [gefunden am 2014-03-18]

## Beschreibung

Die vorliegende Erfindung betrifft ein Verfahren zur Gewinnung von Metallen der 8. bis 14. Gruppe aus elektronischen Schrotten.

Derartige Verfahren sind im Stand der Technik grundsätzlich bekannt. So findet sich im Internet unter der Adresse https:\\www.totalmateria.com der Artikel "Ausmelt/Isasmelt Matte Smelting: Part One"; welcher ein Verfahren zum Recyceln von kupferhaltigen Reststoffen beschreibt. Konkret sieht dieses Verfahren vor, dass derartige Reststoffe in ein zylindrisches Ofengefäß von oben eingebracht werden und im Inneren des Ofengefäßes mit sauerstoffangereicherter Luft, die mit Hilfe einer Top-Lanze von oben in den Ofen eingebracht wird, beaufschlagt wird. Auf diese Weise werden die eingebrachten Reststoffe eingeschmolzen und es entsteht in dem Ofen eine Metallphase mit einer aufschwimmenden Schlackenphase. Diese heterogenen Phasen werden beide zusammen regelmäßig aus dem Gefäß abgestochen. Eine Separierung der Metallphase, welche einen hohen Kupferanteil hat, von der Schlackenphase erfolgt erst außerhalb des zylinderförmigen Ofengefäßes.

Weiterhin offenbart die chinesische Patentanmeldung CN 108224433 A ein Verfahren zum Recyceln von Elektroschrott zwecks Wiedergewinnung, insbesondere von Kupfer. Das Verfahren sieht vor, dass der Elektroschrott als Einsatzmaterial zunächst gewogen, gemischt und zerkleinert wird bevor er nachfolgend in einen vorgeheizten Rotationsofen eingebracht wird. Dort wird der Elektroschrott mit Sauerstoff und gasförmigen Brennstoffen beaufschlagt. Das Einsatzmaterial schmilzt sodann auf in eine Metall- und eine Schlackenphase. Nach einer Blasbehandlung mit Sauerstoff erfolgt ein separates Abstechen der Metallphase und der Schlackenphase.

Die europäische Patentanmeldung EP 1 609 877 A1 offenbart ein Verfahren zur chargenweisen Aufbereitung metallhaltiger Reststoffe, wie insbesondere auch Elektroschrott, in einem rotierenden Reaktor. Das Einsatzgut, d. h. insbesondere der Elektroschrott besteht im Wesentlichen aus Fraktionen solcher Größe, die ein kontinuierliches Beladen während des Betriebs erlauben. In dem Reaktor wird das Material eingeschmolzen, so dass ein aufbereitetes Produkt entsteht, welches im Wesentlichen frei von jeder organischen Substanz ist, weil der ursprüngliche organische Anteil an dem Einsatzgut während des Einschmelzens verbrennt.

Die Patentdokumente WO 86/05211 A1, CA 3 085 071 A1 und XP035315217 offenbaren ebenfalls ein alternatives Verfahren zur Wiedergewinnung von Metallen aus Elektroschrott.

Vor diesem Hintergrund hat sich gezeigt, dass weiterhin ein Bedarf nach verbesserten Verfahren zur Gewinnung von Metallen aus Elektroschrotten besteht.

Der vorliegenden Erfindung liegt daher die Aufgabe zu Grunde ein gegenüber dem Stand der Technik verbessertes Verfahren zur Gewinnung von Metallen der 8. bis 14. Gruppe anzugeben, insbesondere ein Verfahren anzugeben, bei dem zumindest eines der Metalle der Gruppen 8 bis 14 quantitativ aus dem eingesetzten Elektroschrott gewonnen werden.

Erfindungsgemäß wird die Aufgabe durch ein Verfahren mit den Merkmalen des Patentanspruchs 1 gelöst.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Das erfindungsgemäße Verfahren zur Gewinnung von Metallen der 8. bis 14. Gruppe, bevorzugt der Gruppen 8 bis 11 und 14, und insbesondere von Rohkupfer, umfasst die Schritte:
i) Bereitstellen und Einschmelzen einer Aufgabemischung umfassend Elektroschrott in einer Menae von mindestens 10 Gew.-% in einem Schmelzreaktor, so dass eine erste Schmelze mit einer ersten metallischen Phase und einer ersten Schlackenphase gebildet wird,
ii) Abtrennen der ersten Schlackenphase aus dem Schmelzreaktor,
iii) Raffinieren der verbleibenden ersten metallischen Phase mittels eines sauerstoff-haltigen Gases, ggf. unter Zugabe von kupferhaltigen Reststoffen, so dass eine zweite kupferangereicherte Schlackenphase gebildet wird,
iv) ggf. Abtrennen der zweiten Schlackenphase und wiederholen des Schrittes iii),
v) Abtrennen der raffinierten ersten metallischen Phase aus dem Schmelzreaktor, und
vi) Hinzugeben einer weiteren Aufgabemischung umfassend Elektroschrott in die verbliebene zweite kupferangereicherte Schlackenphase und wiederholen der Prozessschritte i) bis vi).

Überraschenderweise hat sich gezeigt, dass das in der zweiten kupferangereicherten Schlackenphase vorhandene Rohkupfer, welches sich beim Raffinieren/Konvertieren als Kupferoxid in der zweiten Schlackenphase angereichert hat, infolge der herrschenden reduzierenden Bedingungen im Schmelzreaktor beim Einschmelzen der nächsten Charge bzw. der weiteren Aufgabemischung in die sodann neue erste metallische Phase überführt und aus dieser direkt zurückgewonnen werden kann. Durch kontinuierliches Fortsetzen des Verfahrens werden somit nur Schlackenphasen erhalten, die weitgehend kupferabgereichert sind. Durch diese in-situ Rückgewinnung des oxidierten Kupfers weist die gewonnene metallische Phase somit einen erhöhten Rohkupfergehalt auf. Zudem hat sich überraschenderweise gezeigt, dass der gesamte Prozess eine durch das Weiterverwenden der noch flüssigen Restschlacke bzw. der zweite kupferangereicherten Schlackenphase eine verbesserte Energiebilanz aufweist und durch den chemisch gebundenen Sauerstoff des Kupferoxids der Restschlacke die ablaufende Verbrennungsreaktion mit jeder weiteren Aufgabemischung unterstützt wird.

Um eine möglichst schmelzflüssige und somit eine nicht zu viskose Schlacke zu erhalten, wird der gesamte Prozess bei einer Temperatur von mindestens 1150 °C, mehr bevorzugt bei einer Temperatur von mindestens 1200 °C, noch mehr bevorzugt bei einer Temperatur von mindestens 1225 °C und am meisten bevorzugt bei einer Temperatur von 1250 °C betrieben. Die Temperatur des Prozesses darf aber eine maximale Temperatur aus anlagentechnischen Gründen nicht überschreiten. Daher beträgt die maximale Temperatur im Prozess 1400 °C, bevorzugt eine maximale Temperatur von 1375 °C, mehr bevorzugt eine maximale Temperatur von 1350 °C, und am meisten bevorzugt eine maximale Temperatur von 1325 °C.

Das erfindungsgemäße Verfahren ist zur pyrometallurgischen Verarbeitung von Elektroschrott vorgesehen. Hiernach sind grundsätzlich bis zu 100 Gew.-% Elektroschrott in der Aufgabemischung einsetzbar.

Unter dem Begriff "Elektroschrott" werden im Sinne der vorliegenden Erfindung zum einen elektronische Altgeräte verstanden, die entsprechend der EU-Richtlinie 2002/96/EG definiert sind. Von dieser Richtlinie erfasste Gerätekategorien betreffen ganze und/oder (teil-)zerlegte Komponenten aus der Reihe umfassend Haushaltsgroßgeräte; Haushaltskleingeräte; IT- und Telekommunikationsgeräte; Geräte der Unterhaltungselektronik; Beleuchtungskörper; elektrische und elektronische Werkzeuge (mit Ausnahme ortsfester industrieller Großwerkzeuge); elektrische Spielzeuge sowie Sport- und Freizeitgeräte; medizinische Geräte (mit Ausnahme aller implantierten und infizierten Produkte); Überwachungs- und Kontrollinstrumente; sowie automatische Ausgabegeräte. Hinsichtlich der einzelnen Produkte, die in die entsprechenden Gerätekategorie fallen wird auf den Anhang IB der Richtlinie verwiesen.

Weiterhin werden unter dem Begriff "Elektroschrott" auch Rückstände und/oder Beiprodukte aus der Elektroschrottverarbeitung verstanden.

Der Elektroschrott kann innerhalb der Aufgabemischung in Form von einzelnen Fraktionen und/oder in Form von Mischungen der jeweiligen Komponenten vorliegen.

Dem Prozess können ggf. im Schritt iii) kupferhaltige Reststoffe zu Kühlzwecken zugegeben werden. Unter dem Begriff "kupferhaltige Reststoffe" werden im Sinne der vorliegenden Erfindung jegliche kupferhaltige Reststoffe verstanden, die einen signifikanten Massenanteil an Kupfer umfassen und von der genannten EU-Richtlinie 2002/96/EG nicht umfasst sind, wie beispielsweise metallische Kupferschrotte, Kupferdachrinnen und/oder getrocknete kupferhaltige Schlämme und/oder Stäube aus der Kupfer- und/oder Kupferlegierungsherstellung und/oder - verarbeitung.

Die Elektroschrotte umfassen im Wesentlichen einen organischen Gehalt in Form von kohlenwasserstoffhaltigen Komponenten, wie insbesondere Kunststoffe, sowie metallische Komponenten, wie insbesondere die Elemente ausgewählt aus der Reihe umfassend Eisen, Ruthenium, Osmium, Cobalt, Rhodium, Indium, Nickel, Palladium, Platin, Kupfer, Silber, Gold, Zink, Cadmium, Quecksilber, Aluminium, Gallium, Indium, Blei und/oder Zinn sowie ggf. Antimon, Titan und/oder Yttrium.

Der organische Gehalt in Form der kohlenwasserstoff-haltigen Komponenten darf allerdings in der Aufgabemischung nicht zu klein sein, da es ansonsten zu keiner ausreichenden Verbrennungsreaktion kommt. Daher beträgt der Anteil an den kohlenwasserstoff-haltigen Komponenten im Elektroschrott bzw. in der Aufgabemischung bevorzugt mindestens 5.0 Gew.-%, mehr bevorzugt mindestens 10.0 Gew.-%. Hinsichtlich des maximalen Gehalts ist der Elektroschrott bzw. die Aufgabemischung limitiert und beträgt daher bevorzugt maximal 80.0 Gew.-%, mehr bevorzugt maximal 70.0 Gew.-%, noch mehr bevorzugt maximal 60.0 Gew.-% und am meisten bevorzugt maximal 50.0 Gew.-%.

Sofern der verfügbare Elektroschrott nicht den gewünschten Anteil an organischem Gehalt und somit nicht den erforderlichen Brennwert aufweist, kann der Aufgabemischung eine gezielte Menge von konventionellen Brennstoffen zugegeben werden. Konventionelle Brennstoffe umfassen hierbei beispielsweise Kohle, Koks und sowie brennbare Gase, wie Erdgas, Propan, Wasserstoff, oder weitere dem Fachmann bekannte Gase.

Das Zuführen der festen und/oder der gasförmigen Brennstoffe kann über eine Zuführeinrichtung, wie eine Lanze, die in den Schmelzreaktor hineinragt, oder eine oder mehrere Düsen, erfolgen.

Das Einschmelzen der Aufgabemischung gemäß Schritt i) erfolgt in Regel in Anwesenheit von Luftsauerstoff. Durch die Zugabe des Luftsauerstoffs, ggf. in Form von sauerstoffangereicherter Luft oder in Form von sauerstoffhaltigem-Gas, die während des Schmelzvorgangs kontinuierlich in den Schmelzreaktor eingebracht wird, erfolgt die Verbrennung der Kohlenwasserstoffe aus der zugeführten Aufgabemischung. Dabei kann die Verbrennung und somit die Wärmeentwicklung gezielt durch die zugegebene Sauerstoffmenge gesteuert werden. Grundsätzlich gilt, dass je höher der Anteil an Kohlenwasserstoffen in der Aufgabemischung ist, desto geringer der Sauerstoffgehalt der zugegebenen Verbrennungsluft sein kann. Aufgrund der Luftzusammensetzung beträgt dieser jedoch immer mindestens 20,5 Vol.-%.

Bei geringem Anteil an Kohlenwasserstoffen in der Aufgabemischung kann der Einschmelzvorgang bei einem Sauerstoffgehalt in der Verbrennungsluft von bis zu 100 Vol.-% durchgeführt werden.

Vorteilhafterweise wird der Schritt i) des erfindungsgemäßen Verfahrens durch selektives Einblasen eines sauerstoffhaltigen-Gases unterstützt, um an der Oberfläche der Schmelze stets eine reduzierende Atmosphäre auszubilden. Die Reaktion wird daher derart eingestellt, dass keine vollständige Verbrennung der Kohlenwasserstoffe zu CO₂ und H₂O erfolgt, sondern ebenfalls Gehalte an CO, H₂ im Prozessgas ausgebildet werden.

Beim Einschmelzen der Aufgabemischung bildet sich eine metallische Phase aus, die das Rohkupfer sowie weitere Schwermetalle, insbesondere Blei (Pb), Zinn (Sn), Zink (Zn), Nickel (Ni) sowie die Edelmetalle Gold (Au) und Silber (Ag) beinhaltet. Die mineralischen Bestandteile des Elektroschrotts der Aufgabemischung bilden zusammen mit Oxiden der sauerstoffaffinen Elemente, wie insbesondere Blei (Pb), Zinn (Sn), Nickel (Ni), Eisen (Fe), Silizium (Si), Titan (Ti), Natrium (Na), Calcium (Ca), Aluminium (Al), Magnesium (Mg), etc. die leichtere Schlackenphase.

Über die Vollständigkeit der Verbrennung an der Schmelzoberfläche wird gleichzeitig der Wärmeeintrag an der Schmelzoberfläche und der Grad Oxidationsgrad der Begleitelemente gesteuert. Auf diese Weise wird die selektive Oxidation der unerwünschten Bestandteile, wie elementares Aluminium oder Silizium oxidiert und gezielt in die Schlackenphase überführt. Die erhaltene metallische Phase kennzeichnet sich daher durch einen Restgehalt beider Elemente von jeweils < 0,1 Gew.-%.

Sofern dem Prozess im Schritt i) eine zu hohe Menge Sauerstoff zugeführt worden ist, so kann die erste Schlackenphase vorteilhafterweise mittels eines Reduktionsmittels reduziert werden. Hierdurch wird die erste Schlackenphase gereinigt und nachreduziert, so dass ggf. vorhandene Schwermetalloxide, wie beispielsweise SnO, Cu₂O, NiO, PbO und/oder ZnO, in ihre metallische Form und damit in die metallische Phase überführt werden können.

Als Schmelzreaktor ist vorzugsweise ein metallurgisches Gefäß vorgesehen, wie beispielsweise ein kippbarer Rotationskonverter, insbesondere ein sog. Top Blowing Rotary Converter (TBRC), oder ein kippbarer Standkonverter. In einer vorteilhaften Ausführungsvariante umfasst das metallurgische Gefäß eine erste Abstichöffnung zum Abstechen der metallischen Phase und/oder eine zweite Abstichöffnung zum Abstechen der Schlackenphase. Die Abstichöffnung zum Abstechen der metallischen Phase ist dabei vorteilhafterweise im Boden und/oder in der Seitenwand des entsprechenden Schmelzreaktors angeordnet, so dass sie über diese entnommen werden kann.

In der vorliegenden Erfindung umfasst die Aufgabemischung, jede der Aufgabemischungen den Elektroschrott in einer Menge von mindestens 10.0 Gew.-%, mehr bevorzugt in einer Menge von mindestens 15.0 Gew.-%, noch mehr bevorzugt in einer Menge von mindestens 20.0 Gew.-%, weiterhin bevorzugt in einer Menge von mindestens 25.0 Gew.-%, weiterhin bevorzugt in einer Menge von mindestens 30.0 Gew.-%, weiterhin bevorzugt in einer Menge von mindestens 35.0 Gew.-%, weiterhin bevorzugt in einer Menge von mindestens 40.0 Gew.-%, weiterhin bevorzugt in einer Menge von mindestens 45.0 Gew.-%, weiterhin bevorzugt in einer Menge von mindestens 50.0 Gew.-%, weiterhin bevorzugt in einer Menge von mindestens 55.0 Gew.-%, weiterhin bevorzugt in einer Menge von mindestens 60.0 Gew.-%, weiterhin bevorzugt in einer Menge von mindestens 65.0 Gew.-%, weiterhin bevorzugt in einer Menge von mindestens 70.0 Gew.-%, weiterhin bevorzugt in einer Menge von mindestens 80.0 Gew.-%, weiterhin bevorzugt in einer Menge von mindestens 90.0 Gew.-%, und am meisten bevorzugt in einer Menge von mindestens 95.0 Gew.-%, bezogen auf die gesamte Aufgabemischung.

In einer weiteren vorteilhaften Ausführungsvariante umfasst die Aufgabemischung einen Schlackenbildner und/oder dieser wird dem Prozess in den Schritten i) und/oder iii) zugegeben. In diesem Zusammenhang ist besonders bevorzugt vorgesehen, dass die Aufgabemischung den Schlackenbildner in einer Menge von mindestens 1/8 des Massenanteils des in der Aufgabemischung vorhandenen Elektroschrottes, mehr bevorzugt in einer Menge von mindestens 1/5, noch mehr bevorzugt in einer Menge von mindestens 1/3 umfasst. Der Schlackenbildner ist vorteilhafterweise ausgewählt aus der Reihe umfassend Eisen, Calciumoxide, Eisenoxide, Siliziumoxide, Magnesiumoxide, Natriumoxide, Calciumcarbonate, Magnesiumcarbonate, Natriumcarbonate und/oder Calciumhydroxide, Eisenhydroxide, Magnesiumhydroxide, Natriumhydroxide und/oder Mischungen hiervon.

Vorteilhafterweise umfasst der Elektroschrott bzw. die Aufgabemischung einen Aluminiumgehalt (elementar) von wenigstens 0.1 Gew.-%, mehr bevorzugt einen Aluminiumgehalt von wenigstens 0.5 Gew.-%, noch mehr bevorzugt einen Aluminiumgehalt von wenigstens 1.0 Gew.-% und am meisten bevorzugt einen Aluminiumgehalt von wenigstens 3.0 Gew.-%. Hinsichtlich des maximalen Gehalts an elementarem Aluminium ist der Elektroschrott bzw. die Aufgabemischung limitiert, da ein zu hoher Aluminiumgehalt sich nachteilig auf die Viskosität und somit die Fließfähigkeit der Schlackenphase als auch auf das Trennverhalten zwischen der metallischen Phase und der Schlackenphase auswirkt. Daher enthält der Elektroschrott bzw. die Aufgabemischung bevorzugt höchstens 20.0 Gew.-% Aluminium, mehr bevorzugt höchstens 15.0 Gew.-% Aluminium, noch mehr bevorzugt höchstens 11.0 Gew.-% Aluminium und am meisten bevorzugt höchstens 8.0 Gew.-% Aluminium.

Sofern der Elektroschrott bzw. die Aufgabemischung einen Aluminiumgehalt von kleiner 5.0 Gew.-% umfasst, so ist vorteilhafterweise vorgesehen, dass dem Prozess, vorzugsweise im Schritt i), Schlackenbildner in einer Menge von bis zu 25.0 Gew.-%, bezogen auf die in der Aufgabemischung enthaltene Menge an Elektroschrott, zugegeben werden. Sofern der Elektroschrott bzw. die Aufgabemischung einen höheren Aluminiumgehalt umfasst, insbesondere einen mit einem Aluminiumgehalt von 5.0 - 10.0 Gew.-%, so beträgt die Menge an Schlackenbildnern, die dem Prozess, vorzugsweise im Schritt i), zugegeben wird, vorteilhafterweise 10.0 - 45.0 Gew.-%. Sofern der Elektroschrott bzw. die Aufgabemischung einen noch höheren Aluminiumgehalt umfasst, insbesondere einen mit einem Aluminiumgehalt von > 10.0 Gew.-%, so beträgt die Menge an Schlackenbildnern, die dem Prozess, vorzugsweise im Schritt i), zugegeben wird, vorteilhafterweise 20.0 - 60.0 Gew.-%.

Vorteilhafterweise ist die Aufgabemischung derart konfiguriert, dass deren Viskosität im geschmolzenen, also flüssigen Aggregatzustand, im Bereich von 0.01 bis 10.0 Pa*s, mehr bevorzugt im Bereich 0.05 bis 10.0 Pa*s, noch mehr bevorzugt im Bereich von 0.1 bis 10.0 Pa*s, und am meisten bevorzugt im Bereich von 0.1 bis 5.0 Pa*s liegt.

Die Chargierung und damit der Energieeintrag in den Schmelzreaktor kann durch unterschiedliche Korngrößen und insbesondere durch zu große Korngrößen ungleichmäßig sein, so dass sich hierdurch ungewünschte Zustände während des Schmelzvorgangs ausbilden. Daher wird der Elektroschrott in zerkleinerter Form bereitgestellt, wobei aufgrund des Zerkleinerungsprozesses kleinere unvermeidbare Fraktionen, wie beispielsweise Stäube und/oder mehlartige Fraktionen, immer mitumfasst sind.

Vorteilhafterweise wird der Elektroschrott auf eine Korngröße kleiner 20.0 Zoll, mehr bevorzugt auf eine Korngröße kleiner 15.0 Zoll, noch mehr bevorzugt auf eine Korngröße kleiner 12.0 Zoll, weiterhin bevorzugt auf eine Korngröße kleiner 10.0 Zoll, weiterhin bevorzugt auf eine Korngröße kleiner 5.0 Zoll und ganz besonders bevorzugt auf eine Korngröße kleiner 2.0 Zoll zerkleinert. Allerdings sollte eine Korngröße von 0.1 Zoll, vorzugsweise eine Korngröße von 0.5 Zoll, mehr bevorzugt eine Korngröße von 1.5 Zoll nicht unterschritten werden. Besonders vorteilhaft hat sich in diesem Zusammenhang erwiesen, wenn der Elektroschrott zudem in Form von Presslingen gemäß Schritt i) bereitgestellt wird. Hierdurch wird zum einen der Reaktorraum des Schmelzreaktors optimal ausgenutzt und zum anderen der Schmelzprozess beschleunigt.

Unter dem Begriff "Pressling" wird im Sinne der vorliegenden Erfindung ein aus zerkleinertem Elektroschrott gepresstes und geformtes Stück verstanden. Insofern können die Presslinge die Form von Briketts, Pellets und/oder agglomerierten Paketen ausbilden.

### Beispiel:

Das Verfahren ist grundsätzlich zur Gewinnung von Nichteisenmetallen der 8. bis 14. Gruppe des Periodensystems vorgesehen. In der vorliegenden Ausführungsvariante ist es insbesondere zur Gewinnung von Rohkupfer aus Elektroschrotten vorgesehen, wobei ebenfalls signifikante Anteile an Silber (Ag), Gold (Au), Platin (Pt) und Palladium (Pd) erhalten werden.

In einem ersten Prozessschritt wurde zunächst eine Aufgabemischung umfassend 68 Gew.-% Elektroschrott sowie Rest Schlackenbildner in Form von 25 Gew.-% eines Eisenoxidzusatzes und 7 Gew.-% eines SiO₂-Zusatzes.

Der bereitgestellte Elektroschrott bestand aus Presslingen mit einer Größe von 1.5 bis 2.5 Zoll, die aus zerkleinertem Elektroschrott gepresst wurden. Die Zusammensetzung des Elektroschrott betrug 18 Gew.-% Cu; 25 Gew.-% Kohlenwasserstoffe; 7 Gew.-% Al, 12 Gew.-% Si, 7 Gew,-% Schwermetalle aus der Reihe umfassend Pb, Sn, Ni, Cr sowie Zn, 3 Gew.-% Ca, 2 Gew.-% Halogene und 5 Gew.-% Fe, sowie Rest chemisch gebundener Sauerstoff als auch unvermeidbare Verunreinigungen.

Die Aufgabemischung wurde in Anwesenheit von Luftsauerstoff in einem rotierenden Schmelzreaktor, im vorliegenden Fall einem rotierenden TBRC, eingeschmolzen. Hierzu wurde die Mischung im Schmelzreaktor mittels eines Brenners entzündet und die pyrolytische Reaktion gestartet. Die Aufgabemischung wies einen Brennwert von ca. 9800 kJ/kg auf.

Die Verbrennungsreaktion und somit die Wärmeentwicklung konnte gezielt durch die zugegebene Sauerstoffmenge gesteuert werden. Der Volumenstrom des Luftsauerstoffs wurde derart angepasst, dass an der Oberfläche der Schmelze stets eine reduzierende Atmosphäre herrschte und keine vollständige Verbrennung des organischen Anteils zu CO₂ und H₂O erfolgte, sondern spezifische Gehalte an CO sowie H₂ im Prozessgas vorhanden waren. Diese wurden entweder im oberen Teil des Schmelzreaktors oder außerhalb des Schmelzreaktors verbrannt.

Nach wenigen Minuten bildete sich bei einer Temperatur von ca. 1200-1300 °C eine erste Schmelze mit einer ersten metallischen Phase und einer ersten, auf der metallischen Phase aufschwimmenden, Schlackenphase aus. Diese wurde sodann über eine in der Seitenwand des Schmelzreaktors angeordnete Abstichöffnung gemäß dem zweiten Prozessschritt abgetrennt. Die Schlackenphase wurde analysiert und wies einen Kupfergehalt von 0.3 - 2.0 Gew.-% sowie eine Viskosität von ca. 0.3 Pa*s auf.

Die in dem Schmelzreaktor verbliebene erste metallischen Phase, die einen Kupfergehalt von ca. 97 Gew.-% aufwies, wurde in dem weiteren Prozessschritt mittels eines sauerstoff-haltigen Gases raffiniert bzw. konvertiert. Hierzu wurde über eine Lanze sauerstoffangereicherte Luft in die metallische erste Phase eingeblasen, so dass die in der metallischen Phase vorhandenen sauerstoffaffinen Elemente, wie Blei (Pb), Zinn (Sn), Nickel (Ni), Eisen (Fe), Silizium (Si), Titan (Ti), Natrium (Na), Calcium (Ca), Aluminium (Al), Magnesium (Mg), etc. aus der metallischen Phase oxidiert wurden. Der Prozessschritt kann ggf. durch Zugabe von Schlackenbildnern unterstützt und durch die Zugabe von kupferhaltigen Reststoffen als Kühlschrott thermisch geregelt werden. Auch diese gebildete zweite Schlackenphase wies eine im Vergleich zu der metallischen Phase kleinere Dichte auf. Der Prozessschritt des Konvertierens wurde vorliegend zweimal wiederholt, wobei nach jeder Konvertierungsstufe die gebildete Schlackenphase oberflächlich abgezogen und im Hinblick auf die Zusammensetzung analysiert wurde. Bei der letzten Konvertierungsstufe bildete sich eine kupferangereicherte Schlackenphase aus, die einen Kupfergehalt in Form von Kupferoxid (Cu₂O) von ca. 20 Gew.-% aufwies.

Durch eine weitere im Boden des Schmelzreaktors angeordnete Abstichöffnung wurde die raffinierte/konvertierte erste metallische Phase aus dem Schmelzreaktor abgelassen, während die kupferangereicherte Schlackenphase der letzten Konvertierungsstufe im Schmelzreaktor verblieb.

Sodann begann der Prozess mit einem neuen Batch gemäß Schritt i), indem eine neue Aufgabemischung umfassend den Elektroschrott auf die kupferangereicherte Schlackenphase gegeben und eingeschmolzen wurde. Die zweite Aufgabemischung wies dabei die gleiche Zusammensetzung wie die erste auf, was allerdings nicht zwingend erforderlich ist. Durch die beim Einschmelzen herrschenden reduzierenden Bedingungen konnte der Rohkupfer- und Schwermetallgehalt der Schlackenphase direkt zurückgewonnen werden. Da auf diese Weise ein Wiederaufschmelzen der Schlackenphase vermieden werden kann, konnten pro t im Schmelzreaktor verbliebener Schlacke ca. 350 kWh Energie eingespart werden.

## Patentansprüche

1. Verfahren zur Gewinnung von Metallen der 8. bis 14. Gruppe, insbesondere von Rohkupfer, umfassend die Schritte:
i) Bereitstellen und Einschmelzen einer Aufgabemischung umfassend Elektroschrott in einer Menge von mindestens 10 Gew.-% in einem Schmelzreaktor, so dass eine erste Schmelze mit einer ersten metallischen Phase und einer ersten Schlackenphase gebildet wird,
ii) Abtrennen der ersten Schlackenphase aus dem Schmelzreaktor,
iii) Raffinieren der verbleibenden ersten metallischen Phase mittels eines sauerstoff-haltigen Gases, ggf. unter Zugabe von kupferhaltigen Reststoffen, so dass eine zweite kupferangereicherte Schlackenphase gebildet wird,
iv) ggf. Abtrennen der zweiten Schlackenphase und wiederholen des Schrittes iii),
v) Abtrennen der raffinierten ersten metallischen Phase aus dem Schmelzreaktor, und
vi) Hinzugeben einer weiteren Aufgabemischung umfassend Elektroschrott in die verbliebene zweite kupferangereicherte Schlackenphase und wiederholen der Prozessschritte i) bis vi).

2. Verfahren nach Anspruch 1, wobei die erste Schlackenphase mittels eines Reduktionsmittels reduziert wird.

3. Verfahren nach Anspruch 1 oder 2, wobei der gesamte Prozess bei einer Temperatur von mindestens 1150 °C durchgeführt wird.

4. Verfahren nach einem der vorhergehenden Ansprüche, wobei die Aufgabemischung einen Schlackenbildner umfasst und/oder dieser dem Prozess in den Schritten i) und/oder iii) zugegeben wird.

5. Verfahren nach Anspruch 4, wobei die Aufgabemischung den Schlackenbildner in einer Menge von mindestens 1/8 des Massenanteils des in der Aufgabemischung vorhandenen Elektroschrottes umfasst.

6. Verfahren nach Anspruch 4 oder 5, wobei der Schlackenbildner ausgewählt ist aus der Reihe umfassend Eisen (metallisch), Calcium-, Magnesium-, Natrium-, Silizium-, Eisenoxide, -carbonate und/oder -hydroxide.

7. Verfahren nach einem der vorhergehenden Ansprüche, wobei die Elektroschrott einen Aluminiumgehalt von 0.1 bis 20.0 Gew.-% umfasst.

8. Verfahren nach einem der vorhergehenden Ansprüche, wobei die Elektroschrott einen organischen Gehalt von 5.0 bis 80.0 Gew.-% umfasst.

9. Verfahren nach einem der vorhergehenden Ansprüche, wobei der Elektroschrott auf eine Korngröße kleiner 20 Zoll zerkleinert, und ggf. in Form von Presslingen gemäß Schritt i) bereitgestellt wird.

10. Verfahren nach einem der vorhergehenden Ansprüche, wobei der Schritt i) durch selektives Einblasen eines sauerstoffhaltigen Gases unterstützt wird.

11. Verfahren nach einem der vorhergehenden Ansprüche, wobei die metallische Phase über eine im Boden und/oder in der Seitenwand des Schmelzreaktors angeordnete Abstichöffnung entnommen wird.

## Claims

1. Method for obtaining metals of the 8th to 14th groups, in particular raw copper, comprising the steps of:
i) providing and melting down a feed mixture comprising electrical scrap in an amount of at least 10 wt% in a smelting reactor, so that a first melt with a first metallic phase and a first slag phase is formed,
ii) separating the first slag phase from the smelting reactor,
iii) refining the remaining first metallic phase by means of an oxygen-containing gas, optionally with the addition of copper-containing residual materials, so that a second, copper-enriched slag phase is formed,
iv) optionally separating off the second slag phase and repeating step iii),
v) separating the refined first metallic phase from the smelting reactor; and
vi) addiing a further feed mixture comprising electrical scrap to the remaining second, copper-enriched slag phase and repeating process steps i) to vi).

2. Method according to claim 1, wherein the first slag phase is reduced by means of a reducing agent.

3. Method according to claim 1 or 2, wherein the entire process is carried out at a temperature of at least 1150° C.

4. Method according to any one of the preceding claims, wherein the feed mixture comprises a slag-forming agent and/or this is added to the process in step or steps i) and/or iii).

5. Method according to claim 4, wherein the feed mixture comprises the slag-forming agent in an amount of at least 1/8 of the mass fraction of the electrical scrap present in the feed mixture.

6. Method according to claim 4 or 5, wherein the slag-forming agent is selected from the group comprising iron (metallic) and calcium, magnesium, sodium, silicon and iron oxides, carbonates and/or hydroxides.

7. Method according to any one of the preceding claims, wherein the electrical scrap has an aluminium content of 0.1 to 20.0 wt%.

8. Method according to any one of the preceding claims, wherein the electrical scrap has an organic content of 5.0 to 80 wt%.

9. Method according to any one of the preceding claims, wherein the electrical scrap is comminuted to a particle size smaller than 20 inches and optionally provided in the form of pressed articles in accordance with step i).

10. Method according to any one of the preceding claims, wherein step i) is assisted by selectively injecting an oxygen-containing gas.

11. Method according to any one of the preceding claims, wherein the metallic phase is removed via a tapping opening arranged in the bottom and/or in the side wall of the smelting reactor.

## Revendications

1. Procédé d'obtention de métaux des groupes 8 à 14, en particulier de cuivre brut, comprenant les étapes consistant à :
(i) fournir et faire fondre un mélange d'alimentation comprenant des déchets électriques en une quantité d'au moins 10 % en poids dans un réacteur de fusion de manière à former une première masse fondue ayant une première phase métallique et une première phase de scories,
(ii) séparer la première phase de scories du réacteur de fusion,
(iii) raffiner la première phase métallique restante au moyen d'un gaz contenant de l'oxygène, éventuellement en ajoutant des résidus contenant du cuivre, de manière à former une seconde phase de scories enrichie en cuivre,
(iv) le cas échéant, séparer la seconde phase de scories et répéter l'étape iii),
(v) séparer la première phase métallique raffinée du réacteur de fusion, et
(vi) ajouter un autre mélange d'alimentation comprenant des déchets électriques dans la seconde phase de scories enrichie en cuivre restante et répéter les étapes de procédé i) à vi).

2. Procédé selon la revendication 1, dans lequel la première phase de scories est réduite au moyen d'un agent réducteur.

3. Procédé selon la revendication 1 ou 2, dans lequel l'ensemble du processus est réalisé à une température d'au moins 1150 °C.

4. Procédé selon l'une des revendications précédentes, dans lequel le mélange d'alimentation comprend un agent de formation de scories et/ou celui-ci est ajouté au processus dans les étapes i) et/ou iii).

5. Procédé selon la revendication 4, dans lequel le mélange d'alimentation comprend l'agent de formation de scories en une quantité d'au moins 1/8 de la fraction massique des déchets électroniques présents dans le mélange d'alimentation.

6. Procédé selon la revendication 4 ou 5, dans lequel l'agent de formation de scories est choisi dans la série comprenant le fer (métallique), le calcium, le magnésium, le sodium, le silicium, les oxydes de fer, les carbonates et/ou les hydroxydes.

7. Procédé selon l'une des revendications précédentes, dans lequel les déchets électroniques ont une teneur en aluminium de 0,1 à 20,0 % en poids.

8. Procédé selon l'une des revendications précédentes, dans lequel les déchets électroniques ont une teneur en matières organiques de 5,0 à 80,0 % en poids.

9. Procédé selon l'une des revendications précédentes, dans lequel les déchets électroniques sont broyés à une granulométrie inférieure à 20 pouces, et le cas échéant, fournis sous forme de compacts selon l'étape i).

10. Procédé selon l'une des revendications précédentes, dans lequel l'étape i) est assistée par l'injection sélective d'un gaz contenant de l'oxygène.

11. Procédé selon l'une des revendications précédentes, dans lequel la phase métallique est prélevée par une ouverture de coulée disposée dans le fond et/ou dans la paroi latérale du réacteur de fusion.
